# EUROPEAN PATENT APPLICATION

(11) **EP 4 787 973 A1**
(43) Date of publication of application: **05.08.2026**
(21) Application number: 23953751.7
(22) Date of filing: 28.09.2023
(51) Int. Cl.: H04W 52/02

(54) **CHANNEL STATE INFORMATION (CSI) REPORT CONFIGURATION ACTIVATION METHODS, COMMUNICATION DEVICE, AND STORAGE MEDIUM**

(71) Applicant: Beijing Xiaomi Mobile Software Co., Ltd., Beijing 100085 (CN)
(72) Inventor: WU, Shijuan, Beijing 100085 (CN)
(74) Representative: Gunzelmann, Rainer
(86) International application number: PCT/CN2023/122864
(87) International publication number: WO 2025/065607

(57) **Abstract**

The embodiments of the present disclosure provide channel state information (CSI) report configuration activation methods, a communication device, and a storage medium. A method comprises: a network device sending to a terminal a media access control (MAC) control element (CE), wherein the MAC CE is used for activating or deactivating a CSI report configuration, and the CSI report configuration comprises a first-type report configuration and/or a second-type report configuration, the first-type report configuration comprising one or more sub-configurations.

## Description

### FIELD

The present disclosure relates to the field of communication technologies, and more particularly to a channel state information (CSI) report configuration activation method, a communication device, and a storage medium.

### BACKGROUND

With the development of communication technologies, the concept of network energy saving (NES) has been proposed. The network energy saving may achieve environmental protection. However, how to achieve the network energy saving while ensuring the wireless communication quality of devices is also a problem that needs to be solved.

### SUMMARY

With the development of technologies, an energy-saving technology of channel state information (CSI) is proposed in the context of network energy saving.

According to embodiments of a first aspect of the present disclosure, a channel state information (CSI) report configuration activation method is provided, which is performed by a network device, and includes: sending by the network device a media access control (MAC) control element (CE) to a terminal, where the MAC CE is configured to activate or deactivate a CSI report configuration, where the CSI report configuration includes a first type of report configuration and/or a second type of report configuration; and the first type of report configuration includes one or more sub-configurations.

According to embodiments of a second aspect of the present disclosure, a channel state information (CSI) report configuration activation method is provided, which is performed by a terminal, and includes: receiving a media access control (MAC) control element (CE) sent by a network device, where the MAC CE is configured to activate or deactivate a CSI report configuration, where the CSI report configuration includes a first type of report configuration and/or a second type of report configuration; and the first type of report configuration includes one or more sub-configurations.

According to embodiments of a third aspect of the present disclosure, a network device is provided, and includes: a sending module configured to send a media access control (MAC) control element (CE) to a terminal, where the MAC CE is configured to activate or deactivate a CSI report configuration, where the CSI report configuration includes a first type of report configuration and/or a second type of report configuration; and the first type of report configuration includes one or more sub-configurations.

According to embodiments of a fourth aspect of the present disclosure, a terminal is provided, and includes: a receiving module configured to receive a media access control (MAC) control element (CE) sent by a network device, where the MAC CE is configured to activate or deactivate a CSI report configuration, where the CSI report configuration includes a first type of report configuration and/or a second type of report configuration; and the first type of report configuration includes one or more sub-configurations.

According to embodiments of a fifth aspect of the present disclosure, a communication system is provided. The communication system includes a terminal and a network device; the network device is configured to perform the method provided in the first aspect; and the terminal is configured to perform the method provided in the second aspect.

According to embodiments of a sixth aspect of the present disclosure, a communication device is provided. The communication device includes: one or more processors configured to call instructions to cause the communication device to perform the method provided in the first aspect or the second aspect.

According to embodiments of a seventh aspect of the present disclosure, a storage medium is provided. The storage medium stores instructions, which are configured to, when run on a communication device, cause the communication device to perform the method provided in the first aspect or the second aspect.

The technical solution provided by the embodiments of the present disclosure realizes activation or deactivation based on the sub-configurations, and thus realizes activation or deactivation at a finer granularity than CSI report configuration, thereby reducing the measurement power consumption of the terminal and saving bit overhead.

It should be understood that the foregoing general description and the following detailed description are illustrative and explanatory only, and are not restrictive of the embodiments of the present disclosure.

### BRIEF DESCRIPTION OF THE DRAWINGS

The accompanying drawings herein are incorporated in and constitute a part of the specification, illustrate embodiments consistent with the present disclosure, and together with the description, serve to explain the principles of the embodiments of the present disclosure.
FIG. 1A is a schematic diagram showing an architecture of a communication system according to an illustrative embodiment.
FIG. 1B is a schematic diagram of a MAC CE according to an illustrative embodiment.
FIG. 2 is an interactive schematic diagram of a channel state information (CSI) report configuration activation method according to an illustrative embodiment.
FIG. 3A is a schematic diagram of a MAC CE in a first format according to an illustrative embodiment.
FIG. 3B is a schematic diagram of a MAC CE in a second format according to an illustrative embodiment.
FIG. 3C is a schematic diagram of a MAC CE in a third format according to an illustrative embodiment.
FIG. 3D is a schematic diagram of a MAC CE in a fourth format according to an illustrative embodiment.
FIG. 3E is a schematic diagram of a MAC CE in a fifth format according to an illustrative embodiment.
FIG. 4 is a flow chart of a channel state information (CSI) report configuration activation method according to an illustrative embodiment.
FIG. 5 is a flow chart of a channel state information (CSI) report configuration activation method according to an illustrative embodiment.
FIG. 6 is a block diagram of a network device according to an illustrative embodiment.
FIG. 7 is a block diagram of a terminal according to an illustrative embodiment.
FIG. 8A is a block diagram of a terminal according to an illustrative embodiment.
FIG. 8B is a block diagram of a communication device according to an illustrative embodiment.

### DETAILED DESCRIPTION

Embodiments of the present disclosure provide a channel state information (CSI) report configuration activation method and apparatus, a communication device, a communication system, and a storage medium.

In a first aspect, embodiments of the present disclosure provide a channel state information (CSI) report configuration activation method. The method is performed by a network device, and includes: sending by the network device a media access control (MAC) control element (CE) to a terminal, where the MAC CE is configured to activate or deactivate a CSI report configuration, where the CSI report configuration includes a first type of report configuration and/or a second type of report configuration; and the first type of report configuration includes one or more sub-configurations.

In the above embodiments, the network device may activate different types of CSI report configurations by sending the MAC CE to the terminal. When the activated CSI report configuration is the first type of report configuration, the activation or deactivation at the sub-configuration granularity may also be achieved, thereby reducing the measurement power consumption of the terminal and saving bit overhead.

In combination with some embodiments of the first aspect, in some embodiments, the MAC CE includes: a first indication bit indicating activation or deactivation of the CSI report configuration; and a second indication bit configured for the terminal to determine activation or deactivation of a sub-configuration in an activated first type of report configuration.

In the above embodiments, an indication bit indicating activation or deactivation of the sub-configuration is introduced into the MAC CE, so that the indication of activation or deactivation at the sub-configuration granularity may be realized.

In combination with some embodiments of the first aspect, in some embodiments, a length of the MAC CE is variable, and the length of the MAC CE is related to an activated CSI report configuration.

In the above embodiments, the length of the MAC CE is variable, and the length of the MAC CE is related to the activated CSI report configuration. In this way, on the one hand, the required CSI report configuration may be activated through the MAC CE, and the length of the MAC CE is related to the activated CSI report configuration rather than a fixed length, thus reducing unnecessary bit waste.

In combination with some embodiments of the first aspect, in some embodiments, the first indication bit is located in a first octet of the MAC CE; and the second indication bit is located in a second octet of the MAC CE.

Based on the above scheme, a bit distribution example of the MAC CE is given, which has the characteristics of a high effective utilization rate of the bits of the MAC CE and simple implementation.

In combination with some embodiments of the first aspect, in some embodiments, one second octet is configured for activating a sub-configuration of one activated first type of report configuration.

In the above embodiments, one second octet is configured for activating the sub-configuration of one activated first type of report configuration, which may reduce bit overhead as much as possible and has the characteristics of simple implementation.

In conjunction with some embodiments of the first aspect, in some embodiments, one second octet corresponds to one activated CSI report configuration; and in a case that an activated CSI report configuration corresponding to an n-th second octet is the second type of report configuration, the n-th second octet has a first value, where n is a positive integer.

In the above embodiments, one second octet is configured for activating the sub-configuration of one activated CSI report configuration, and does not involve the bit indication of the unactivated CSI report configuration, thus saving the bit overhead of the MAC CE.

In combination with some embodiments of the first aspect, in some embodiments, in a case that one bit in the n-th second octet indicates a sub-configuration, values of all bits in the n-th second octet are 0 or values of all bits in the n-th second octet are 1; or, in a case that one bit value of the n-th second octet indicates a combination of activation or deactivation of at least one sub-configuration, a first value of the n-th second octet is a set value.

Based on the above scheme, in a case that the second indication bit may indicate the activation or deactivation of the configuration by means of a bitmap or a joint indication, when the activated CSI report configuration is the second type of report configuration, the value of the corresponding octet is simple to implement.

In conjunction with some embodiments of the first aspect, in some embodiments, the MAC CE has a fixed length; and the second indication bit indicates activation or deactivation of the sub-configuration of the activated first type of report configuration.

In the above embodiments, the length of the MAC CE may be fixed or constant, so that one or more unused bits in the MAC CE may be used to indicate activation or deactivation of the sub-configuration, thereby reusing the MAC CE in the related art to activate or deactivate the sub-configuration.

In a second aspect, embodiments of the present disclosure provide a channel state information (CSI) report configuration activation method, and the method includes: receiving a media access control (MAC) control element (CE) sent by a network device, where the MAC CE is configured to activate or deactivate a CSI report configuration, where the CSI report configuration includes a first type of report configuration and/or a second type of report configuration; and the first type of report configuration includes one or more sub-configurations.

In the above embodiments, the terminal receives a first type of MAC CE sent by the network device and uses first information in the first type of MAC CE to indicate the activation or deactivation of the sub-configuration, so that the activation or deactivation of the CSI report configuration at a finer granularity is realized, thus reducing the measurement power consumption of the terminal and saving bit overhead.

In combination with some embodiments of the second aspect, in some embodiments, the MAC CE includes: a first indication bit indicating activation or deactivation of the CSI report configuration; and a second indication bit configured for the terminal to determine activation or deactivation of a sub-configuration in an activated first type of report configuration.

In combination with some embodiments of the second aspect, in some embodiments, a length of the MAC CE is variable, and the length of the MAC CE is related to an activated CSI report configuration.

In combination with some embodiments of the second aspect, in some embodiments, the first indication bit is located in a first octet of the MAC CE; and the second indication bit is located in a second octet of the MAC CE.

In combination with some embodiments of the second aspect, in some embodiments, one second octet is configured for activating a sub-configuration of one activated first type of report configuration.

In conjunction with some embodiments of the second aspect, in some embodiments, one second octet corresponds to one activated CSI report configuration; and in a case that an activated CSI report configuration corresponding to an n-th second octet is the second type of report configuration, the n-th second octet has a first value, where n is a positive integer.

In combination with some embodiments of the second aspect, in some embodiments, in a case that one bit in the n-th second octet indicates a sub-configuration, values of all bits in the n-th second octet are 0 or values of all bits in the n-th second octet are 1; or, in a case that one bit value of the n-th second octet indicates a combination of activation or deactivation of at least one sub-configuration, a first value of the n-th second octet is a set value.

In conjunction with some embodiments of the second aspect, in some embodiments, the MAC CE has a fixed length; and the second indication bit indicates activation or deactivation of the sub-configuration of the activated first type of report configuration.

According to a third aspect, a network device is provided, and the network device includes: a sending module configured to send a media access control (MAC) control element (CE) to a terminal, where the MAC CE is configured to activate or deactivate a CSI report configuration, where the CSI report configuration includes a first type of report configuration and/or a second type of report configuration; and the first type of report configuration includes one or more sub-configurations.

In a fourth aspect, a terminal is provided, and the terminal includes: a receiving module configured to receive a media access control (MAC) control element (CE) sent by a network device, where the MAC CE is configured to activate or deactivate a CSI report configuration, where the CSI report configuration includes a first type of report configuration and/or a second type of report configuration; and the first type of report configuration includes one or more sub-configurations.

In a fifth aspect, a communication system is provided, and the communication system includes a terminal and a network device. The network device is configured to perform the method provided in the first aspect, and the terminal is configured to perform the method provided in the second aspect.

In a sixth aspect, a communication device is provided, and the communication device includes: one or more processors configured to call instructions to cause the communication device to perform the method provided in the first aspect or the second aspect.

In a seventh aspect, embodiments of the present disclosure provide a storage medium, and the storage medium stores instructions, which are configured to, when run on a communication device, cause the communication device to perform the method provided in the first aspect or the second aspect.

In an eighth aspect, embodiments of the present disclosure provide a program product, which is configured to, when executed by a communication device, cause the communication device to perform the method described in the optional implementations of the first aspect or the second aspect.

In a ninth aspect, embodiments of the present disclosure provide a computer program, which is configured to, when executed on a computer, causes the computer to perform the method described in the optional implementations of the first aspect or the second aspect.

It may be understood that the above network device, terminal, communication device, communication system, storage medium, program product, and computer program are all used to perform the methods provided by the embodiments of the present disclosure. Therefore, for the beneficial effects that they may achieve, reference may be made to the beneficial effects in the corresponding methods, which will not be repeated here.

The embodiments of the present disclosure provide the channel state information (CSI) report configuration activation method, the communication device, and the storage medium. In some embodiments, the terms such as channel state information (CSI) report configuration activation method, information processing method, and communication method may be used interchangeably, the terms such as information indicating device, information processing device, information transmission device, terminal, and/or network device may be used interchangeably, and the terms such as communication system and information processing system may be used interchangeably.

The embodiments of the present disclosure are not exhaustive, but are only illustrative of some embodiments, and are not intended to be a specific limitation on the scope of protection of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined; in addition, the embodiments may be arbitrarily combined, for example, some or all of the steps of different embodiments may be arbitrarily combined, and a certain embodiment may be arbitrarily combined with the optional implementations of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "aforesaid", "this", etc., may mean "one and only one", or "one or more", "at least one", etc. For example, when using articles such as "a", "an", "the" in English in translation, the noun after the article may be understood as a singular expression or a plural expression.

In the embodiments of the present disclosure, "a plurality" refers to two or more.

In some embodiments, the terms "at least one", "one or more", "a plurality of", "multiple" and the like may be used interchangeably.

In some embodiments, "at least one of A and B", "A and/or B", "A in a case, B in another case", "B in a case, A in another case", etc., may include the following technical solutions according to the situation: in some embodiments, A (A is executed independently of B); in some embodiments, B (B is executed independently of A); in some embodiments, selection is made between A and B for execution (A and B are selectively executed); in some embodiments, A and B (both A and B are executed). When there are more branches such as A, B, C, etc., the same applies.

In some embodiments, the recording manner of "A or B" may include the following technical solutions according to the situation: in some embodiments, A (A is executed independently of B); in some embodiments, B (B is executed independently of A); in some embodiments, selection is made between A and B for execution (A and B are selectively executed). When there are more branches such as A, B, C, etc., the same applies.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and should not constitute unnecessary restrictions due to the use of prefixes. For example, in a case that the description object is a "field", the ordinal numbers before the "field" in the "first field" and the "second field" do not limit the position or order between the "fields", and the "first" and "second" do not limit whether the "fields" they modify are in the same message, nor do they limit the order of the "first field" and the "second field". For another example, in a case that the description object is a "level", the ordinal numbers before the "level" in the "first level" and the "second level" do not limit the priority between the "levels". For another example, the number of description objects is not limited by the ordinal number, and may be one or more. Taking the "first device" as an example, the number of "devices" may be one or more. In addition, the objects modified by different prefixes may be the same or different. For example, in a case that the description object is "device", the "first device" and the "second device" may be the same device or different devices, and their types may be the same or different. For another example, in a case that the description object is "information", the "first information" and the "second information" may be the same information or different information, and their contents may be the same or different.

In some embodiments, "including A", "comprising A", "indicating A", and "carrying A" may be interpreted as directly carrying A or indirectly indicating A.

In some embodiments, terms such as "determining...", "in a case that...", "while...", "when...", "in response to...", "if...", etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than", and "below" may be used interchangeably.

In some embodiments, devices, etc. may be interpreted as physical or virtual, and their names are not limited to the names recorded in the embodiments. Terms such as "apparatus", "equipment", "device", "circuit", "network element", "node", "function", "unit", "section", "system", "network", "chip", "chip system", "entity", and "subject" may be used interchangeably.

In some embodiments, "network" may be interpreted as devices included in the network (e.g., access network device, core network device, etc.).

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part" and the like may be used interchangeably.

In some embodiments, the terms "terminal", "terminal device", "user equipment (UE)", "user terminal" "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal', "handset", "user agent", "mobile client", "client" and the like may be used interchangeably.

In some embodiments, the access network device, the core network device, or the network device may be replaced with a terminal. For example, the embodiments of the present disclosure may also be applied to a structure which replaces the communication between the access network device, core network device, or network device and the terminal with the communication between a plurality of terminals (for example, device-to-device (D2D), vehicle-to-everything (V2X), etc.). In this case, the terminal may have all or part of the functions of the access network device. In addition, terms such as "uplink" and "downlink" may also be replaced by terms corresponding to the communication between the terminals (for example, "side"). For example, uplink channel, downlink channel, etc. may be replaced by side channel, and uplink, downlink, etc. may be replaced by sidelink.

In some embodiments, the terminal may be replaced by the access network device, the core network device, or the network device. In this case, the access network device, the core network device, or the network device may have all or part of the functions of the terminal.

In some embodiments, obtaining data, information, etc., may comply with the laws and regulations of the country where the obtainment takes place.

In some embodiments, data, information, etc., may be obtained with a user's consent.

In addition, each element, each row, or each column in tables of the embodiments of the present disclosure may be implemented as an independent embodiment, and any combination of any elements, any rows, or any columns may also be implemented as an independent embodiment.

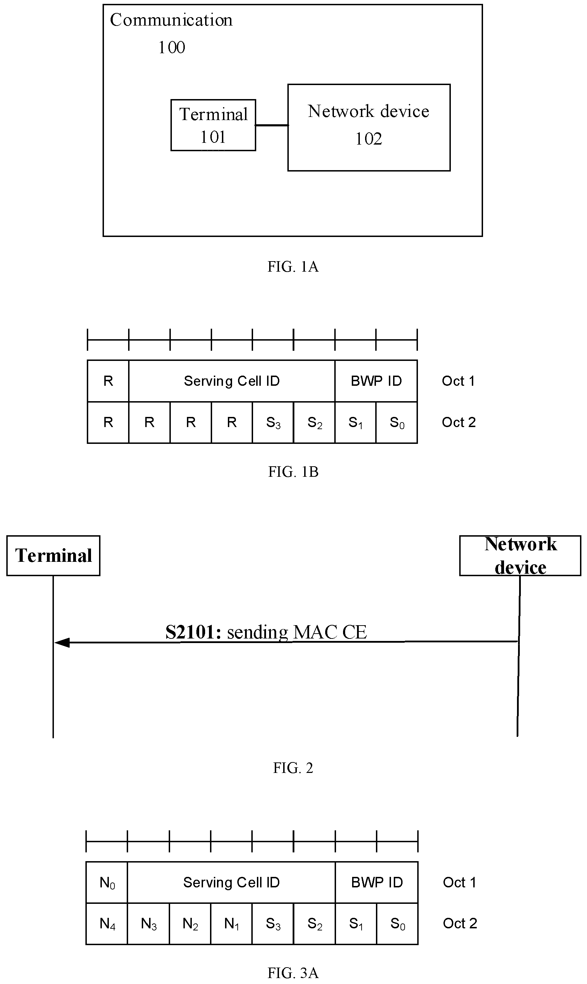

FIG. 1A is a schematic diagram showing an architecture of a communication system according to an embodiment of the present disclosure.

As shown in FIG. 1A, a communication system 100 includes a terminal 101 and a network device 102. The network device 102 may include: an access network device and a core network device.

In some embodiments, the terminal 101 may include at least one of, for example, a mobile phone, a wearable device, an Internet of Things device, a vehicle with a communication function, a smart vehicle, a tablet computer (Pad), a computer with wireless transmitting and receiving functions, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited to this.

In some embodiments, the access network device may be, for example, a node or device that accesses a terminal to a wireless network. The access network device may include at least one of an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solution of the present disclosure may be applied to an Open RAN architecture. In this case, interfaces between the access network devices or within the access network devices involved in the embodiments of the present disclosure may become internal interfaces of the Open RAN, and processes and information interactions between these internal interfaces may be implemented through software or programs.

In some embodiments, the access network device may include a central unit (CU) and a distributed unit (DU). The CU may also be referred to as a control unit. Protocol layers of the access network device may be split by using the CU-DU structure. Functions of some protocol layers are placed in the CU for centralized control; functions of the remaining part or all of the protocol layers are distributed in the DU, and the CU centrally controls the DU, but the present disclosure is not limited to this.

In some embodiments, the core network device may be a device including a first network element, etc., or may be a plurality of devices or a group of devices, each including a first network element. The network element may be virtual or physical. The core network may include, for example, at least one of an evolved packet core (EPC), a 5G core network (5GCN), and a next generation core (NGC).

In some embodiments, the first network element is, for example, an access and mobility management function (AMF).

In some embodiments, the first network element is, for example, a mobility management entity (MME).

In some embodiments, the first network element is used for access and mobility management, such as registration management, connection management, and mobility management, etc., but its name is not limited thereto.

In some embodiments, the first network element may be a network element independent of the core network device.

In some embodiments, the core network may further include a second network element, etc. The second network element may include: user data management (UDM), etc.

It may be understood that the communication system described in the embodiments of the present disclosure is for the purpose of more clearly illustrating the technical solution of the embodiments of the present disclosure, and does not constitute a limitation on the technical solution provided by the embodiments of the present disclosure. A person skilled in the art may know that with the evolution of the system architecture and the emergence of new business scenarios, the technical solution provided by the embodiments of the present disclosure is also applicable to similar technical problems.

The following embodiments of the present disclosure may be applied to the communication system 100 shown in FIG. 1A, or some entities of the communication system 100 shown in FIG. 1A, but are not limited thereto. The entities shown in FIG. 1A are examples, and the communication system may include all or part of the entities in FIG. 1A, or may include other entities other than FIG. 1A. The number and form of the entities are arbitrary, and the connection relationship between the entities is an example. The entities may be connected or disconnected, and the connection may be in any manner, which may be a direct connection or an indirect connection, and may be a wired connection or a wireless connection.

The embodiments of the present disclosure may be applied to long-term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile Communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X) system, systems using other communication methods, next generation systems based on them, etc. In addition, multiple systems may also be combined (for example, the combination of LTE or LTE-A and 5G) for application.

In some embodiments, FIG. 1B is a schematic diagram of a MAC CE according to an illustrative embodiment.

A serving cell identifier (ID) indicates an ID of a serving cell to which the MAC CE is applicable, and the length of this field is 5 bits.

A bandwidth part (BWP) ID indicates an uplink BWP applied by the MAC CE, as a code point of a bandwidth part indicator field in downlink control information (DCI) as specified in TS 38.212 [9]. The length of this field is 2 bits.

Sᵢ: this field indicates an activation/deactivation state of a semi-persistent CSI report configuration in a CSI report configuration (CSI ReportConfigToAddModList), as specified in TS 38.331 [5].

S₀ refers to a CSI report configuration that includes PUCCH resources for the SP CSI report in the indicated BWP and has the smallest CSI configuration identifier (ReportConfigId) within a list whose type is set to semi-persistent based on PUCCH (semi-PersistentONPUCCH).

S₁ refers to a report configuration that includes PUCCH resources for the SP CSI report in the indicated BWP and has a second lowest CSI configuration identifier (ReportConfigId), and so on.

In a case that the number of report configurations in the list whose type is set to semi-persistent based on PUCCH (semi-PersistentONPUCCH) in the indicated BWP is less than i+1, the MAC CE shall ignore the Sᵢ field.

In a case that the Sᵢ field is set to 1, it indicates that a corresponding semi-persistent CSI report configuration should be activated. In a case that the Sᵢ field is set to 0, it indicates that the corresponding semi-persistent CSI report configuration will be deactivated.

R refers to a reserved field, and its bit value is set to 0.

FIG. 2 is an interactive schematic diagram of a channel state information (CSI) report configuration activation method according to an illustrative embodiment. As shown in FIG. 2, the embodiment of the present disclosure relates to the channel state information (CSI) report configuration activation method, which is performed by the communication system 100, and includes the following steps.

In step S2101, a network device sends a MAC CE to a terminal.

In some embodiments, the terminal receives the MAC CE sent by the network device.

In some embodiments, the network device may include but is not limited to an access network device.

In some embodiments, the terminal may include various types of communication devices. The terminal may be a mobile terminal or a fixed terminal. For example, the terminal may be a mobile phone, a tablet computer, a smart office device, a smart home device, a vehicle-mounted device, and/or an aircraft device.

In some embodiments, the MAC CE may be configured to activate or deactivate a semi-persistent channel state information (SP-CSI) report configuration or an aperiodic CSI report configuration.

In some embodiments, the MAC CE may include one of: a first type of MAC CE configured to activate or deactivate the reporting of a CSI report at a granularity of a sub-configuration, that is, the first type of MAC CE may be configured for activation or deactivation of a first type of report configuration, but not for activation or deactivation of a second type of report configuration; a second type of MAC CE configured to activate or deactivate the reporting of a CSI report at a granularity of a CSI report configuration as the granularity, that is, the second type of MAC CE may be configured for activation or deactivation of the second type of report configuration, but not for activation or deactivation of the first type of report configuration; and a third type of MAC CE configured to activate or deactivate the first type of report configuration, and also configured to activate or deactivate the second type of report configuration.

In some embodiments, the MAC CE sent by the network device may be configured for activation or deactivation of the first type of report configuration and/or the second type of report configuration.

In some embodiments, the MAC CE sent in step S2101 may be any one of the above MAC CEs.

Optionally, the MAC CE sent by the network device in the embodiments of the present disclosure may be the third type of MAC CE.

In some embodiments, the CSI report configuration is configured for CSI measurement and/or CSI measurement reporting of the terminal.

In some embodiments, the terminal performs CSI measurement according to the CSI report configuration, and performs reporting only when a reporting condition is met. The reporting here is to send measured CSI information to the network device.

In some embodiments, the CSI report configuration may include at least one of: time-frequency resource information of a measured reference signal; or indication information of a reporting quantity.

In some embodiments, the sub-configuration may include one or more of: a transmission parameter of a measured reference signal, including but not limited to, a time-frequency resource location, whether beam transmission is used, and/or a transmission direction when beam transmission is used, etc.; or indication information of a reporting quantity.

In some embodiments, the reporting quantities defined by different sub-configurations may be the same or different.

In some embodiments, the network device may send one or more CSI report configurations; different CSI report configurations may correspond to different CSI resource configurations; multiple CSI report configurations may correspond to the same CSI resource configuration; and the CSI report configuration may include a semi-persistent CSI report configuration, a dynamic CSI report configuration and/or a periodic CSI report configuration. The dynamic CSI report configuration may also be called an aperiodic CSI report configuration; and different CSI report configurations may have different identifiers.

In some embodiments, different sub-configurations may correspond to the same CSI resource configuration and/or different CSI resource configurations.

In some embodiments, the CSI report configuration includes a first type of report configuration and/or a second type of report configuration.

In some embodiments, the first type of report configuration may be an enhanced report configuration based on the second type of report configuration.

In some embodiments, the first type of report configuration may be an enhanced CSI report configuration.

In some embodiments, the second type of report configuration may be a legacy CSI report configuration (report config).

In some embodiments, the first type of report configuration includes one or more sub-configurations.

In some embodiments, the second type of report configuration does not include a sub-configuration.

In some embodiments, the sub-configuration corresponds to a spatial domain (SD) pattern element and/or transmission power.

It should be noted that each first type of report configuration may include multiple sub-configurations; and each sub-configuration may be associated with a spatial domain (SD) pattern and/or multiple power domain patterns.

In some embodiments, the first type of report configuration may include a first parameter. In some embodiments, the first parameter may be referred to as a legacy parameter for performing CSI measurement reporting without distinguishing between SD and/or transmission power.

In some embodiments, the first parameter may be a common CSI parameter that is not included in any sub-report.

In some embodiments, the first parameter may be a CSI parameter included in a specific sub-configuration in the first type of report configuration. For example, the specific sub-configuration may be a default sub-configuration.

In some embodiments, the first parameter may indicate a reference signal for performing CSI measurement, a resource location of the reference signal, a reporting quantity and/or a reporting condition.

In the embodiments of the present disclosure, the MAC CE includes: a first indication bit indicating activation or deactivation of the CSI report configuration; and a second indication bit configured for the terminal to determine activation or deactivation of a sub-configuration in an activated first type of report configuration.

In some embodiments, the MAC CE sent by the network device may include one or more bitmaps.

In some embodiments, the MAC CE sent by the network device may include multiple octets.

In some embodiments, one octet may include 8 bits.

In some embodiments, at least one second indication bit is a bitmap, where one bit in the bitmap indicates activation or deactivation of one sub-configuration.

It should be noted that at least one second indication bit may indicate activation or deactivation of at least one sub-configuration in the first type of report configuration by means of a bitmap. Each bit in the bitmap corresponds to one sub-configuration, and different bits carry specific bit values to indicate the activation or deactivation of the sub-configurations corresponding to the bits.

It is worth noting that the method of indicating the activation or deactivation of the sub-configuration based on the bitmap may effectively reduce the decoding complexity of the second indication bit in the first type of MAC CE. However, since one bit in the bitmap corresponds to one sub-configuration, the number of sub-configurations whose activation or deactivation may be indicated by the second indication bit in the first type of MAC CE is limited by the number of second indication bits in the MAC CE.

In some embodiments, the second indication bit may indicate a combined state of activation or deactivation of one or more sub-configurations in one first type of report configuration by means of a joint indication. For example, in this case, one value of multiple second indication bits may correspond to the combined state of activation or deactivation of the sub-configurations in the first type of report configuration, and different values correspond to different combined states.

In some embodiments, an MAC protocol data unit (PDU) in which the MAC CE is located includes a header and a payload. The header is a header of an MAC sub-PDU, and may include a logical channel identifier (LCID) field, and an LCID carried in the LCID field may be used. The first indication bit and the second indication bit may be included in the payload.

In some embodiments, the second indication bit may be a reserved bit in the MAC CE.

The MAC CE shown in FIG. 1B may include two octets.

A first octet (Oct 1) has one reserved bit, and a second octet (Oct 2) has four reserved bits. Oct 2 further has four bits for indicating activation or deactivation of the CSI report configuration, which are the first indication bits.

The reserved bits of Oct 1 and/or Oct 2 may all be used as the second indication bits.

Oct 1 further indicates a serving cell identifier and/or a bandwidth part (BWP) identifier. For example, two bits in Oct 1 indicate the BWP identifier, and five bits in Oct 1 indicate the cell identifier. The cell identifier is configured to identify a cell that sends the MAC CE, or a cell in which the MAC CE is effective.

For example, the reserved bits in Oct 1 and Oct 2 may all be used as the second indication bits, and the bit distribution of the MAC CE may be shown in FIG. 3A. In FIG. 3A, Nᵢ represents the second indication bit, and a value of i ranges from 0 to 4. In FIG. 3A, Sⱼ represents the first indication bit, and a value of j ranges from 0 to 3.

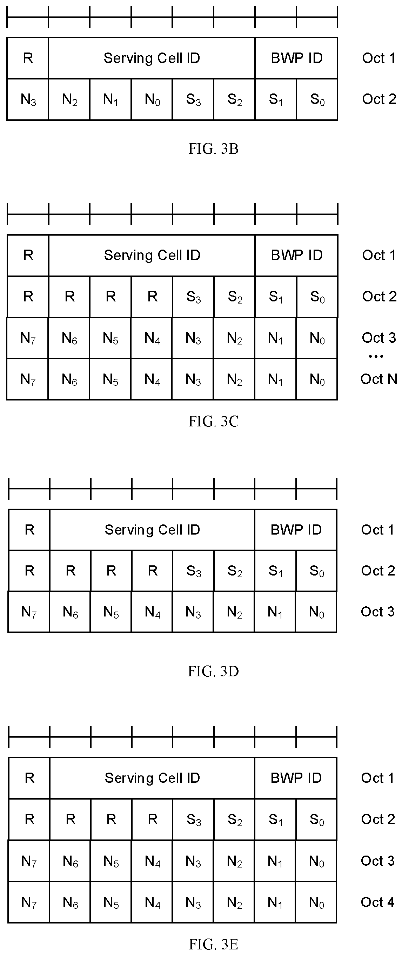

For example, the reserved bits in Oct 2 may all be used as the second indication bits, and the bit distribution of the MAC CE may be shown in FIG. 3B. In FIG. 3A, Nᵢ represents the second indication bit, and a value of i ranges from 0 to 3. In FIG. 3A, Sⱼ represents the first indication bit, and a value of j ranges from 0 to 3.

In some embodiments, the indices of the second indication bits in the MAC CE that indicate the sub-configurations are ordered in a high-to-low sequence of the identifiers of the sub-configurations, or the indices of the second indication bits in the MAC CE that indicate the sub-configurations are ordered in a low-to-high sequence of the identifiers of the sub-configurations.

In some embodiments, the indices of the second indication bits in the MAC CE that indicate the sub-configurations are ordered in a front-to-back sequence of the sub-configurations in the CSI report configuration, or the indices of the second indication bits in the MAC CE that indicate the sub-configurations are ordered in a back-to-front sequence of the sub-configurations in the CSI report configuration.

In some embodiments, the CSI report configuration may be sent via a radio resource control (RRC) message. The RRC message may carry one or more information elements (IEs). Assuming that one IE is configured with one CSI report configuration, a position of one sub-configuration in the IE determines a front-to-back order of the sub-configuration among multiple sub-configurations. Assuming that one IE is configured with multiple CSI report configurations, a position of one sub-configuration in the IE depends on both a position of the CSI report configuration in the IE and its own position in the CSI report configuration.

As shown in FIG. 3A and FIG. 3B, the MAC CE may include more than two octets, and in this case, the bits included in octets starting from Oct 3 of the MAC CE may all be second indication bits.

In some embodiments, a length of the MAC CE is variable.

In some embodiments, in a case that the length of the MAC CE is variable, the MAC CE may include two or more octets.

In some embodiments, in a case that the length of the MAC CE is variable, the MAC CE may include octets starting from Oct 3, which may all indicate activation or deactivation of sub-configurations.

In some embodiments, in a case that the number of the second indication bits in the MAC CE is greater than the number of the sub-configurations included in the activated CSI report configuration, the excess second indication bits have a first value. For example, the first value may be 0.

In a case that an activated CSI report configuration corresponding to an n-th second octet is the second type of report configuration, the n-th second octet has a first value, where n is a positive integer.

In combination with some embodiments of the first aspect, in some embodiments, in a case that one bit in the n-th second octet indicates a sub-configuration, values of all bits in the n-th second octet are 0 or values of all bits in the n-th second octet are 1; or, in a case that one bit value of the n-th second octet indicates a combination of activation or deactivation of at least one sub-configuration, a first value of the n-th second octet is a set value.

In some embodiments, the set value may be indicated by the network device or specified by a protocol.

In some other embodiments, in a case that the number of the second indication bits in the MAC CE is greater than the number of the sub-configurations included in the activated CSI report configuration, values of the excess second indication bits may be randomly set, but the indication content of the excess second indication bits is invalid. In this case, when the terminal receives such MAC CE, the excess second indication bits will be ignored.

In some embodiments, in a case that a length of the MAC CE is variable, the length of the MAC CE is related to an activated CSI report configuration.

In some embodiments, in a case that a length of the MAC CE is variable, the length of the MAC CE is related to the number of activated CSI report configurations.

In some embodiments, in a case that a length of the MAC CE is variable, the length of the MAC CE is positively correlated with the number of activated CSI report configurations. That is, in these embodiments, the greater the number of activated CSI report configurations is, the longer the length of the MAC CE is.

In some embodiments, in a case that length of the MAC CE is variable, the length of the MAC CE is configured to vary in steps of one octet.

As shown in FIG. 3C to FIG. 3E, the first indication bit is located in the first octet of the MAC CE (e.g., Oct 2); and the second indication bit is located in the second octet of the MAC CE (e.g., Oct n), where n may be greater than or equal to 3.

In some embodiments, the first octet and the second octet may be the same octet or different octets.

In FIG. 3C to FIG. 3E, Nᵢ represents the second indicator bit, and a value of i ranges from 0 to 4. In FIG. 3A, Sⱼ represents the first indicator bit, and a value of j ranges from 0 to 3.

The MAC CE shown in FIG. 3C has N octets. The MAC CE shown in FIG. 3D has three octets. The MAC CE shown in FIG. 3E has four octets.

In an embodiment, one second octet is configured to activate a sub-configuration of one activated first type of report configuration.

In this implementation, the MAC CE has only the second indication bit for the sub-configuration of the first type of report configuration, that is, the number of the second indication bits is related to the number of the first type of report configurations activated by the MAC CE.

For example, one activated first type of report configuration corresponds to one octet. In a case that the MAC CE activates the sub-configurations of M first type of report configurations, there are M octets including the second indication bit in the MAC CE. The larger M is, the greater the number of the second indication bits in the MAC CE, or the more octets the MAC CE includes, the longer the MAC CE is.

In some other embodiments, one second octet corresponds to one activated CSI report configuration, and at this time, the CSI report configuration may be the first type of report configuration and/or the second type of report configuration activated by the MAC CE. For example, in a case that the MAC CE activates X CSI report configurations, there are X octets in the MAC CE corresponding to the X activated CSI report configurations. In this case, one second octet corresponds to one activated CSI report configuration; and when the activated CSI report configuration corresponding to the n-th second octet is the second type of report configuration, the n-th second octet has a first value, where n is a positive integer.

In some embodiments, n may be less than or equal to N, where N may be the number of CSI report configurations activated by the MAC CE.

In some embodiments, in a case that one bit in the n-th second octet indicates a sub-configuration, values of all bits in the n-th second octet are 0 or values of all bits in the n-th second octet are 1.

In some embodiments, in a case that one bit value of the n-th second octet indicates a combination of activation or deactivation of at least one sub-configuration, a first value of the n-th second octet is a set value. When one octet in the MAC CE corresponds to one activated CSI report configuration, the greater the number of activated CSI report configurations, the larger the length of the MAC CE.

The octets in the MAC CE corresponding to the activated CSI report configurations are ordered in a descending sequence of the identifiers of the activated CSI report configurations, or, the octets in the MAC CE corresponding to the activated CSI report configurations are ordered in an ascending sequence of the identifiers of the activated CSI report configurations, or, the octets in the MAC CE corresponding to the activated CSI report configurations are ordered in a descending sequence of the numbers of the first indication bits corresponding to the activated CSI report configurations, or, the octets in the MAC CE corresponding to the activated CSI report configurations are ordered in an ascending sequence of the numbers of the first indication bits corresponding to the activated CSI report configurations, or, the octets in the MAC CE corresponding to the activated CSI report configurations are ordered in a descending sequence of the indexes of the activated CSI report configurations, or, the octets in the MAC CE corresponding to the activated CSI report configurations are ordered in an ascending sequence of the indexes of the activated CSI report configurations.

In an embodiment, since one octet corresponds to one activated CSI report configuration, the octet may indicate activation or deactivation of the sub-configuration by means of a bitmap. In this case, when the number of the second indication bits included in one octet is greater than the number of the sub-configurations included in one activated CSI report configuration, the excess second indication bits are invalid or ignored.

In some other implementations, eight second indication bits included in one octet may also jointly indicate the activation states of multiple sub-configurations in the CSI report configuration.

In some embodiments, the MAC CE has a fixed length. For example, the length of the MAC CE is fixed at 16 bits, that is, the MAC CE fixedly includes two octets.

In this case, the MAC CE includes octets, namely, Oct 1 and Oct 2, reserved bits in Oct 1 and/or Oct 2 may be used as the second indication bits, and the second indication bit indicates the activation or deactivation of the sub-configuration of the activated first type of report configuration.

In some embodiments, in a case that the MAC CE does not activate any first type of report configuration, values of the reserved bits in Oct 1 and/or Oct 2 may be the first value, or remain in a reserved state.

In some embodiments, indices of the second indication bits in one second octet that indicate the sub-configurations are ordered in a high-to-low sequence of the identifiers of the sub-configurations in a corresponding activated CSI report configuration, or indices of the second indication bits in one second octet that indicate the sub-configurations are ordered in a low-to-high sequence of the identifiers of the sub-configurations in a corresponding activated CSI report configuration.

In some embodiments, indices of the second indication bits in one second octet that indicate the sub-configurations are ordered in a front-to-back sequence of the sub-configurations in the activated CSI report configuration, or indices of the second indication bits in one second octet that indicate the sub-configurations are ordered in a back-to-front sequence of the sub-configurations in the CSI report configuration.

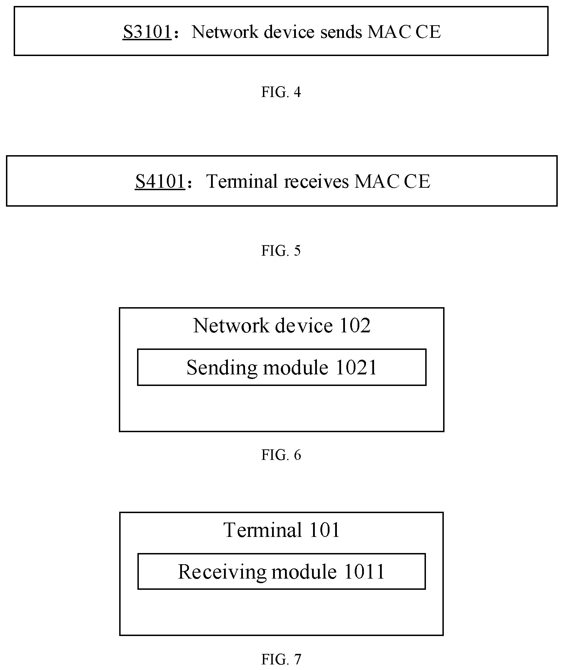

As shown in FIG. 4, an embodiment of the present disclosure provides a CSI report configuration activation method, which is performed by a network device, and may include the following steps.

In step S3101, the network device sends an MAC CE.

In some embodiments, the network device may include but is not limited to an access network device.

In some embodiments, the network device sends the MAC CE to a terminal.

In some embodiments, the MAC CE may be configured to activate or deactivate a semi-persistent channel state information (SP-CSI) report configuration or an aperiodic CSI report configuration.

It is worth noting that, for optional implementations of step S3101, reference may be made to the relevant description of the corresponding embodiment of FIG. 2.

In some embodiments, the MAC CE sent by the network device may be configured for activation or deactivation of a first type of report configuration and/or a second type of report configuration.

In some embodiments, the MAC CE includes: a first indication bit indicating activation or deactivation of the CSI report configuration; and a second indication bit configured for the terminal to determine activation or deactivation of a sub-configuration in an activated first type of report configuration.

In some embodiments, a length of the MAC CE is variable, and the length of the MAC CE is related to an activated CSI report configuration.

In some embodiments, the first indication bit is located in a first octet of the MAC CE; and the second indication bit is located in a second octet of the MAC CE.

In some embodiments, one second octet is configured for activating a sub-configuration of one activated first type of report configuration.

In some embodiments, one second octet corresponds to one activated CSI report configuration; and in a case that an activated CSI report configuration corresponding to an n-th second octet is the second type of report configuration, any bit value in the n-th second octet is a first value, where n is a positive integer.

In some embodiments, n may be less than or equal to N, where N may be the number of CSI report configurations activated by the MAC CE.

In some embodiments, the MAC CE has a fixed length; and the second indication bit indicates activation or deactivation of the sub-configuration of the activated first type of report configuration.

As shown in FIG. 5, an embodiment of the present disclosure provides a CSI report configuration activation method, which is executed by a terminal, and may include the following steps.

In step S4101, the terminal receives an MAC CE.

In some embodiments, the terminal receives the MAC CE sent by a network device.

In some embodiments, the MAC CE is configured to activate or deactivate a CSI report configuration.

In some embodiments, the MAC CE sent by the network device may be configured for activation or deactivation of a first type of report configuration and/or a second type of report configuration.

In some embodiments, the CSI report configuration includes a first type of report configuration and/or a second type of report configuration; and the first type of report configuration includes one or more sub-configurations.

It is worth noting that, for the relevant description of the MAC CE in this embodiment, and the relevant description of the first type of report configuration and/or the second type of report configuration, reference may be made to the relevant part of the embodiment corresponding to FIG. 2, which will not be repeated here.

The MAC CE includes: a first indication bit indicating activation or deactivation of the CSI report configuration; and a second indication bit configured for the terminal to determine activation or deactivation of a sub-configuration in an activated first type of report configuration.

In some embodiments, a length of the MAC CE is variable, and the length of the MAC CE is related to an activated CSI report configuration.

In some embodiments, the first indication bit is located in a first octet of the MAC CE; and the second indication bit is located in a second octet of the MAC CE.

In some embodiments, one second octet is configured for activating a sub-configuration of one activated first type of report configuration.

In some embodiments, one second octet corresponds to one activated CSI report configuration; and in a case that an activated CSI report configuration corresponding to an n-th second octet is the second type of report configuration, the n-th second octet has a first value, where n is a positive integer.

In some embodiments, for specific examples of the first value, reference may be made to the relevant description of the embodiment corresponding to FIG. 2.

In some embodiments, n may be less than or equal to N, where N may be the number of CSI report configurations activated by the MAC CE.

In some embodiments, the MAC CE has a fixed length; and the second indication bit indicates activation or deactivation of the sub-configuration of the activated first type of report configuration.

In some embodiments, the above method may include the methods of the embodiments on the above communication system side, terminal side, network device side, etc., which will not be repeated here.

In order to reduce the power consumption of the network device, the network device may dynamically reduce the number of spatial elements or transmission power corresponding to the transmission of downlink data based on the dynamic changes of transmission load, thereby reducing network energy consumption. The dynamic adaptation spatial pattern (SD) mode of the spatial elements or transmission power is considered.

In some cases, the sub-configurations are introduced in the CSI report configuration. One CSI report configuration may include one or more sub-configurations. At this time, the terminal may perform CSI measurement reporting at a granularity of the sub-configuration. For the same CSI report configuration, L sub-configurations may be included, and each sub-configuration is associated with a specific spatial pattern (SD) and/or multiple power domain patterns.

To improve the reporting efficiency of the terminal and reduce the corresponding reporting overhead, for the configured L sub-configurations, a base station may activate/deactivate N sub-configurations of the sub-configurations through a relevant signaling. For SP CSI reporting, the activation/deactivation may be performed through the MAC CE.

In a case that a CSI report configuration (CSI report config) includes multiple reporting sub-configurations, the signaling is designed to indicate activated/deactivated reporting sub-configurations, so as to improve the efficiency and accuracy of CSI measurement reporting and achieve consistent understanding between the terminal and the base station.

In a case that a CSI report configuration (CSI report config) includes multiple reporting sub-configurations, the terminal may perform corresponding CSI measurement reporting according to an activated reporting sub-configuration.

In some embodiments, in a case that an activated CSI report configuration corresponding to an n-th second octet is the second type of report configuration, the terminal ignores indication information of the n-th second octet.

In this case, how to activate the CSI report configuration and/or the sub-configuration in the CSI report configuration is an issue that needs to be further resolved.

The embodiments of the present disclosure provide a method for activating a CSI report configuration including at least one sub-configuration.

In a case that the CSI report configuration includes multiple reporting sub-configurations, the terminal receives the MAC CE and determines activation states of a corresponding report configuration and/or sub-configuration. The activation state may be activated or deactivated.

Specific implementations are as follows.

Mode 1: the MAC CE indicates activation or deactivation of a sub-configuration of a specific CSI report configuration, and the activation or deactivation of the sub-configuration is determined based on each CSI report configuration.

The MAC CE indicates a state of at least one CSI report configuration by means of a bitmap, and the state represents activation or deactivation of the CSI report configuration.

The MAC CE indicates an activation state of a sub-configuration corresponding to an activated CSI report configuration by means of the bitmap.

The number of bits occupied by the MAC CE is determined based on the total number of activated report configurations. For a legacy CSI report configuration, a corresponding indication value indicating the sub-configuration is 0.

The number of bits occupied by the MAC CE is determined based on an activated enhanced CSI report configuration. This enhanced CSI report configuration may include at least one sub-configuration. For the legacy CSI report configuration, an indication bit for the sub-configuration is not introduced.

In this case, a size of the MAC CE is variable, that is, a length of the MAC CE is a variable length, and the size may be understood as the length of the MAC CE.

Mode 2: for an activation state of a sub-configuration of a specific report configuration, an indication signaling corresponding to the sub-configuration is applied to multiple sub-configurations.

The MAC CE indicates an activation state of at least one CSI report configuration by means of a bitmap.

The MAC CE indicates an activation state of a sub-configuration corresponding to an activated enhanced CSI report configuration by means of the bitmap.

For the base station, in a case that the CSI report configuration includes multiple reporting sub-configurations, the base station sends the MAC CE to indicate the activation state of the corresponding report configuration and/or sub-configuration.

Mode 1: the MAC CE indicates activation or deactivation of a sub-configuration of a specific CSI report configuration, and the activation or deactivation of the sub-configuration is determined based on each CSI report configuration.

The MAC CE indicates a state of at least one CSI report configuration by means of a bitmap, and the state represents activation or deactivation of the CSI report configuration.

The MAC CE indicates an activation state of a sub-configuration corresponding to an activated CSI report configuration by means of the bitmap.

The number of bits occupied by the MAC CE is determined based on the total number of activated report configurations. For a legacy CSI report configuration, a corresponding indication value indicating the sub-configuration is 0.

The number of bits occupied by the MAC CE is determined based on an activated enhanced CSI report configuration. This enhanced CSI report configuration may include at least one sub-configuration. For the legacy CSI report configuration, an indication bit for the sub-configuration is not introduced.

In this case, a size of the MAC CE is variable, that is, a length of the MAC CE is a variable length, and the size may be understood as the length of the MAC CE.

Mode 2: for an activation state of a sub-configuration of a specific report configuration, an indication signaling corresponding to the sub-configuration is applied to multiple sub-configurations.

The MAC CE indicates an activation state of at least one CSI report configuration by means of a bitmap.

The MAC CE indicates an activation state of a sub-configuration corresponding to an activated enhanced CSI report configuration by means of the bitmap.

The specific implementations of the present disclosure will be described from the perspective of the terminal in the following.

The terminal is a terminal that supports NES features. To support measurement reporting of multiple SD patterns and/or multiple power domain patterns, the NES supports defining sub-CSI reporting of multiple sub-configurations for the same CSI report configuration. Compared with that one CSI report configuration corresponds to one CSI report, the NES supports that one CSI report configuration corresponds to multiple sub-configurations, and each sub-configuration corresponds to one sub-CSI measurement reporting, thus effectively improving the performance of dynamic CSI measurement reporting.

It is worth noting that an enhanced CSI report configuration under the NES refers to a CSI report configuration including at least one sub-configuration. The legacy CSI report configuration does not include a corresponding sub-configuration.

For the indication signaling of the sub-configuration under different reporting types, the specific implementations of the present disclosure will be described in the following.

Implementation 1: a new MAC CE is designed, a corresponding field is added, and an activation state of a corresponding sub-configuration is indicated.

As shown in FIG. 3C, corresponding N₀, ..., N₇ in an octet are applied to corresponding activated CSI report configurations indicated by S₀, S₁, ..., S₃, the number of bits occupied by the MAC CE is variable, and a value of n is a positive integer less than or equal to N.

Mode 1-1: the number of bits occupied by the MAC CE is determined based on the total number of activated report configurations.

As shown in FIG. 3E, in a case that the report configurations corresponding to S₀ and S₁ are activated, the CSI report configuration corresponding to S₁ is the legacy CSI report configuration, and the CSI report configuration corresponding to S₀ is the enhanced CSI report configuration, the corresponding MAC CE occupies 32 bits. N₀ to N₇ of Oct 4 correspond to the CSI report configuration of S₁, and N₀ to N₇ of Oct 4 indicate a bit value of 0.

Mode 1-2: the number of bits occupied by the MAC CE is determined based on the total number of activated report configurations. An illustrative scenario is shown in FIG. 3D. In a case that the CSI report configurations corresponding to S₀ and S₁ are activated, the CSI report configuration corresponding to S₁ is the legacy CSI report configuration, and the CSI report configuration corresponding to S₀ is the enhanced CSI report configuration, the number of bits occupied by the corresponding MAC CE is equal to 24. N₀ to N₇ of Oct 3 correspond to the enhanced CSI report configuration of S₀, and N₀ to N₇ of Oct 3 indicate the activation state of the sub-configuration of the enhanced CSI report configuration corresponding to S₀.

Implementation 2: the MAC CE is used to indicate activation or deactivation of the sub-configuration. For example, an existing reserved bit is reused. For example, "R" is used to indicate the activation state of the corresponding sub-configuration. The specific structure of the MAC CE may be as shown in FIG. 3A and/or FIG. 3B.

Nᵢ represents an activation state of a sub-configuration corresponding to at least one activated CSI report configuration. The number of bits occupied by the MAC CE is fixed at 16. An information field Nᵢ (i=0, 1, 2, ...) indicating the sub-configuration is applied to the activated CSI report configuration. The CSI report configuration includes at least one enhanced CSI report configuration.

In a case that the corresponding activated CSI report configuration is the legacy CSI report configuration, the terminal ignores the corresponding Nᵢ field.

In this embodiment, in a case that the corresponding enhanced CSI report configuration and the legacy CSI report configuration coexist in the NES scenario, a corresponding indication signaling is designed to determine the activation state of the CSI report configuration.

In a case that the CSI report configuration includes multiple reporting sub-configurations, the terminal receives the MAC CE and determines the activation state of the corresponding report configuration and/or sub-configuration.

In a case that the CSI report configuration includes multiple reporting sub-configurations, the base station sends the MAC CE to indicate the activation state of the corresponding report configuration and/or sub-configuration.

Embodiments of the present disclosure also provide a device for implementing any of the above methods. For example, a device is provided, and the device includes a unit or module for implementing each step performed by the terminal in any of the above methods. For another example, another device is provided, and the device includes a unit or module for implementing each step performed by the network device (for example, an access network device, or a core network device, etc.) in any of the above methods.

It should be understood that the division of the units or modules in the above devices is only a division of logical functions, and in actual implementations, they may be fully or partially integrated into one physical entity, or they may be physically separated. In addition, the units or modules in the devices may be implemented by means of a processor calling software. For example, the device includes a processor, the processor is connected to a memory, and instructions are stored in the memory. The processor calls the instructions stored in the memory to implement any of the above methods or implement the functions of the units or modules of the above devices. The processor is, for example, a general-purpose processor, such as a central processing unit (CPU) or a microprocessor, and the memory is a memory inside the device or a memory outside the device. Alternatively, the units or modules in the devices may be implemented by means of hardware circuits, and the functions of some or all of the units or modules may be realized by designing the hardware circuits. The above hardware circuits may be understood as one or more processors. For example, in an implementation, the above hardware circuit is an application-specific integrated circuit (ASIC), and the functions of some or all of the above units or modules are realized by designing the logical relationship of the components in the circuit. For another example, in another implementation, the above hardware circuit may be realized by a programmable logic device (PLD). Taking a field programmable gate array (FPGA) as an example, it may include a large number of logic gate circuits, and the connection relationship between the logic gate circuits is configured by a configuration file, so as to realize the functions of some or all of the above units or modules. All units or modules of the above devices may be realized by means of the processor calling software, or by means of the hardware circuit, or in part by means of the processor calling software, and in the rest by means of the hardware circuit.

In embodiments of the present disclosure, the processor is a circuit with a signal processing capability. In an implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may implement certain functions through the logical relationship of a hardware circuit, and the logical relationship of the hardware circuit is fixed or reconfigurable. For example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, the processor may also be a hardware circuit designed for artificial intelligence, which may be understood as an ASIC, such as a neural network processing unit (NPU), a tensor processing unit (TPU), a deep learning processing unit (DPU), etc.

FIG. 6 is a block diagram of a network device 102 provided according to an illustrative embodiment. As shown in FIG. 6, the network device 102 provided in the embodiment of the present disclosure includes: a sending module 1021 configured to send a media access control (MAC) control element (CE) to a terminal.

The MAC CE is configured to activate or deactivate a CSI report configuration, the CSI report configuration includes a first type of report configuration and/or a second type of report configuration, and the first type of report configuration includes one or more sub-configurations.

Optionally, the sending module 1021 may be configured to perform the steps related to information sending and receiving performed by the network device in any of the above channel state information (CSI) report configuration activation methods, which are not repeated here.

In some embodiments, the network device 102 further includes one or more processing modules configured to perform information processing.

In some embodiments, the network device 102 may further include one or more receiving modules. The receiving module may be configured to perform the steps related to receiving performed by the network device.

In some embodiments, the MAC CE includes: a first indication bit indicating activation or deactivation of the CSI report configuration; and a second indication bit configured for the terminal to determine activation or deactivation of a sub-configuration in an activated first type of report configuration.

In some embodiments, a length of the MAC CE is variable, and the length of the MAC CE is related to an activated CSI report configuration.

In some embodiments, the first indication bit is located in a first octet of the MAC CE; and the second indication bit is located in a second octet of the MAC CE.

In some embodiments, one second octet is configured for activating a sub-configuration of one activated first type of report configuration.

In some embodiments, one second octet corresponds to one activated CSI report configuration; and in a case that an activated CSI report configuration corresponding to an n-th second octet is the second type of report configuration, any bit value in the n-th second octet is a first value, where n is a positive integer less than or equal to N; and N is the number of CSI report configurations activated by the MAC CE.

In some embodiments, the MAC CE has a fixed length; and the second indication bit indicates activation or deactivation of the sub-configuration of the activated first type of report configuration.

FIG. 7 is a block diagram of a terminal 101 according to an illustrative embodiment. As shown in FIG. 7, the terminal 101 provided in the embodiment of the present disclosure includes: a receiving module 1011 configured to receive a media access control (MAC) control element (CE) sent by a network device. The MAC CE is configured to activate or deactivate a CSI report configuration, the CSI report configuration includes a first type of report configuration and/or a second type of report configuration, and the first type of report configuration includes one or more sub-configurations.

Optionally, the receiving module 1011 may be configured to perform the steps related to information receiving and sending performed by the terminal in any of the above channel state information (CSI) report configuration activation methods, which are not repeated here.

In some embodiments, the terminal 101 further includes one or more processing modules configured to perform information processing.

In some embodiments, the terminal 101 further includes a sending module configured to perform the steps related to sending performed by the terminal.

In some embodiments, the MAC CE includes: a first indication bit indicating activation or deactivation of the CSI report configuration; and a second indication bit configured for the terminal to determine activation or deactivation of a sub-configuration in an activated first type of report configuration.

In some embodiments, a length of the MAC CE is variable, and the length of the MAC CE is related to an activated CSI report configuration.

In some embodiments, the first indication bit is located in a first octet of the MAC CE; and the second indication bit is located in a second octet of the MAC CE.

In some embodiments, one second octet is configured for activating a sub-configuration of one activated first type of report configuration.

In some embodiments, one second octet corresponds to one activated CSI report configuration; and in a case that an activated CSI report configuration corresponding to an n-th second octet is the second type of report configuration, any bit value in the n-th second octet is a first value, where n is a positive integer less than or equal to N; and N is the number of CSI report configurations activated by the MAC CE.

In some embodiments, the MAC CE has a fixed length; and the second indication bit indicates activation or deactivation of the sub-configuration of the activated first type of report configuration.

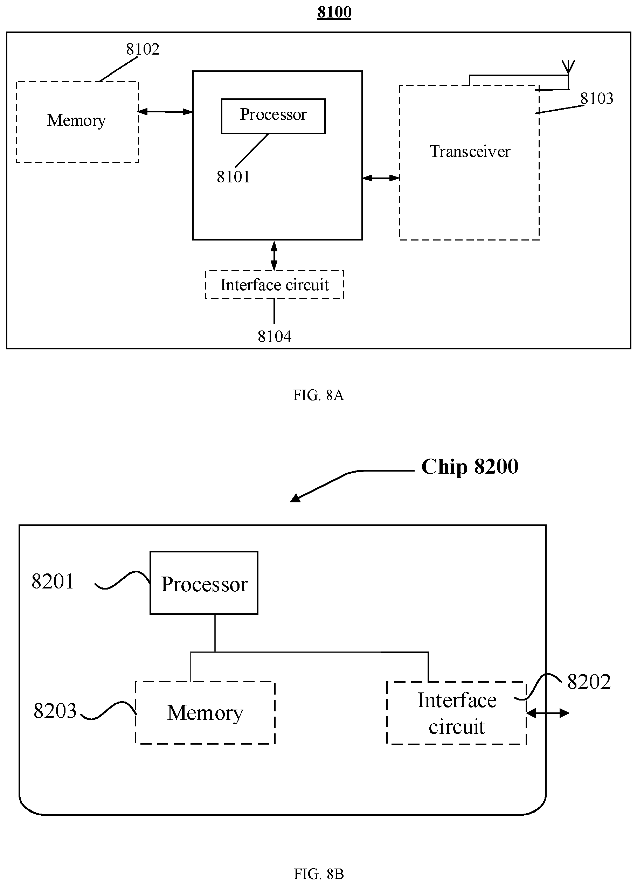

FIG. 8A is a block diagram of a communication device 8100 according to an embodiment of the present disclosure. The communication device 8100 may be a terminal (e.g., a user equipment (UE), etc.) and a network device (e.g., an access network device or a core network device, etc.), or a chip, chip system, or processor, etc. that supports a network device to implement any of the above methods, or a chip, chip system, or processor, etc. that supports a terminal to implement any of the above channel state information (CSI) report configuration activation methods. The communication device 8100 may be used to implement the channel state information (CSI) report configuration activation methods described in the above method embodiments, and for details, reference may be made to the description in the above method embodiments.

As shown in FIG. 8A, the communication device 8100 includes one or more processors 8101. The processor 8101 may be a general-purpose processor or a dedicated processor, for example, a baseband processor or a central processing unit. The baseband processor may be used to process the communication protocol and the communication data, and the central processing unit may be used to control the communication device (such as a base station, a baseband chip, a terminal, a terminal chip, a DU or a CU, etc.), execute programs, and process the data of the program. The processor 8101 is used to call instructions so that the communication device 8100 performs any of the above channel state information (CSI) report configuration activation methods.

In some embodiments, the communication device 8100 further includes one or more memories 8102 for storing instructions. Optionally, all or part of the memories 8102 may also be located outside the communication device 8100.

In some embodiments, the communication device 8100 further includes one or more transceivers 8103. When the communication device 8100 includes one or more transceivers 8103, the communication (such as sending and receiving) steps in the above methods are executed by the transceiver 8103, and the other steps are executed by the processor 8101.

In some embodiments, the transceiver may include a receiver and a transmitter, and the receiver and the transmitter may be separate or integrated. Optionally, the terms such as transceiver, transceiver unit, transceiving machine, transceiver circuit, etc. may be used interchangeably, the terms such as transmitter, transmission unit, transmitting machine, transmission circuit, etc. may be used interchangeably, and the terms such as receiver, receiving unit, receiving machine, receiving circuit, etc. may be used interchangeably.

Optionally, the communication device 8100 further includes one or more interface circuits 8104, which are connected to the memory 8102. The interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and the structure of the communication device 8100 may not be limited by FIG. 8A. The communication device may be an independent device or may be part of a large device. For example, the communication device may be: (1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 8B is a block diagram of a chip 8200 according to an embodiment of the present disclosure. In a case that the communication device 8100 may be a chip or a chip system, reference may be made to the schematic diagram of the chip 8200 shown in FIG. 8B, but the present disclosure is not limited thereto.

The chip 8200 includes one or more processors 8201, and the processor 8201 is used to call instructions to cause the chip 8200 to perform any of the above channel state information (CSI) report configuration activation methods.

In some embodiments, the chip 8200 further includes one or more interface circuits 8202, which are connected to the memory 8203. The interface circuit 8202 may be used to receive signals from the memory 8203 or other devices, and the interface circuit 8202 may be used to send signals to the memory 8203 or other devices. For example, the interface circuit 8202 may read the instructions stored in the memory 8203 and send the instructions to the processor 8201. Optionally, the terms such as interface circuit, interface, transceiver pin, and transceiver may be used interchangeably.

In some embodiments, the chip 8200 further includes one or more memories 8203 for storing instructions. Optionally, all or part of the memories 8203 may be located outside the chip 8200.

The present disclosure also provides a storage medium, on which instructions are stored, and when the instructions are executed on the communication device 8100, the communication device 8100 performs any of the above methods. Optionally, the storage medium is an electronic storage medium. Optionally, the storage medium is a computer-readable storage medium, but it may also be a storage medium readable by other devices. Optionally, the storage medium may be a non-transitory storage medium, but it may also be a transitory storage medium.

The present disclosure also provides a program product, and when the program product is executed by the communication device 8100, the communication device 8100 performs any one of the above channel state information (CSI) report configuration activation methods. Optionally, the program product is a computer program product.

The present disclosure also provides a computer program, which, when executed on a computer, causes the computer to execute any one of the above channel state information (CSI) report configuration activation methods.

Those skilled in the art will readily appreciate other implementations of the disclosed embodiments after considering the specification and practicing the invention disclosed herein. The present disclosure is intended to cover any variations, uses, or adaptations of the disclosed embodiments, which follow the general principles of the embodiments of the present disclosure and include common knowledge or customary technical means in the art that are not disclosed in the present disclosure. The specification and embodiments are to be considered merely illustrative, and the true scope and spirit of the embodiments of the present disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

## Claims

1. A channel state information (CSI) report configuration activation method, comprising:
sending by a network device a media access control (MAC) control element (CE) to a terminal, wherein the MAC CE is configured to activate or deactivate a CSI report configuration, wherein the CSI report configuration comprises a first type of report configuration and/or a second type of report configuration; and the first type of report configuration comprises one or more sub-configurations.

2. The method according to claim 1, wherein the MAC CE comprises:
a first indication bit indicating activation or deactivation of the CSI report configuration; and
a second indication bit configured for the terminal to determine activation or deactivation of a sub-configuration in an activated first type of report configuration.

3. The method according to claim 2, wherein a length of the MAC CE is variable, and the length of the MAC CE is related to an activated CSI report configuration.

4. The method according to claim 3, wherein the first indication bit is located in a first octet of the MAC CE; and the second indication bit is located in a second octet of the MAC CE.

5. The method according to claim 4, wherein one second octet is configured for activating a sub-configuration of one activated first type of report configuration.

6. The method according to claim 4, wherein one second octet corresponds to one activated CSI report configuration; and
in a case that an activated CSI report configuration corresponding to an n-th second octet is the second type of report configuration, the n-th second octet has a first value, wherein n is a positive integer.

7. The method according to claim 6, wherein in a case that one bit in the n-th second octet indicates a sub-configuration, values of all bits in the n-th second octet are 0 or values of all bits in the n-th second octet are 1; or
in a case that one bit value of the n-th second octet indicates a combination of activation or deactivation of at least one sub-configuration, a first value of the n-th second octet is a set value.

8. The method according to claim 2, wherein the MAC CE has a fixed length; and
the second indication bit indicates activation or deactivation of the sub-configuration of the activated first type of report configuration.

9. A channel state information (CSI) report configuration activation method, comprises:
receiving a media access control (MAC) control element (CE) sent by a network device, wherein the MAC CE is configured to activate or deactivate a CSI report configuration, wherein the CSI report configuration comprises a first type of report configuration and/or a second type of report configuration; and the first type of report configuration comprises one or more sub-configurations.

10. The method according to claim 9, wherein the MAC CE comprises:
a first indication bit indicating activation or deactivation of the CSI report configuration; and
a second indication bit configured for the terminal to determine activation or deactivation of a sub-configuration in an activated first type of report configuration.

11. The method according to claim 10, wherein a length of the MAC CE has is variable, and the length of the MAC CE is related to an activated CSI report configuration.

12. The method according to claim 11, wherein the first indication bit is located in a first octet of the MAC CE; and the second indication bit is located in a second octet of the MAC CE.

13. The method according to claim 12, wherein one second octet is configured for activating a sub-configuration of one activated first type of report configuration.

14. The method of claim 12, wherein one second octet corresponds to one activated CSI report configuration; and
in a case that an activated CSI report configuration corresponding to an n-th second octet is the second type of report configuration, the n-th second octet has a first value, wherein n is a positive integer.

15. The method according to claim 14, wherein in a case that one bit in the n-th second octet indicates a sub-configuration, values of all bits in the n-th second octet are 0 or values of all bits in the n-th second octet are 1; or
in a case that one bit value of the n-th second octet indicates a combination of activation or deactivation of at least one sub-configuration, a first value of the n-th second octet is a set value.

16. The method according to claim 10, wherein the MAC CE has a fixed length; and
the second indication bit indicates activation or deactivation of the sub-configuration of the activated first type of report configuration.

17. A network device, comprising:
a sending module configured to send a media access control (MAC) control element (CE) to a terminal, wherein the MAC CE is configured to activate or deactivate a CSI report configuration, wherein the CSI report configuration comprises a first type of report configuration and/or a second type of report configuration; and the first type of report configuration comprises one or more sub-configurations.

18. A terminal, comprising:
a receiving module configured to receive a media access control (MAC) control element (CE) sent by a network device, wherein the MAC CE is configured to activate or deactivate a CSI report configuration, wherein the CSI report configuration comprises a first type of report configuration and/or a second type of report configuration; and the first type of report configuration comprises one or more sub-configurations.

19. A communication device, comprising:
one or more processors configured to call instructions to cause the communication device to perform the channel state information (CSI) report configuration activation method according to any one of claims 1 to 8 or any one of claims 9 to 16.

20. A storage medium, storing instructions, which are configured to, when run on a communication device, cause the communication device to perform the channel state information (CSI) report configuration activation method according to any one of claims 1 to 8 or any one of claims 9 to 16.
